# EUROPEAN PATENT APPLICATION

(11) **EP 2 814 100 A1**
(43) Date of publication of application: **17.12.2014**
(21) Application number: 13171700.1
(22) Date of filing: 12.06.2013
(51) Int. Cl.: H01M 8/12, H01M 4/86, H01M 4/88, H01M 4/90

(54) **Impregnation of an electrochemical cell cathode backbone**

(71) Applicant: Topsøe Fuel Cell A/S, 2800 Kgs. Lyngby (DK)
(72) Inventor: PRIMDAHL, Søren, 3550 Slangerup (DK); KJØLBY, Sif, 4300 Holbæk (DK); KÜNGAS, Rainer, 2300 Copenhagen (DK); KLEMENS HANSEN, Karsten, 2625 Vallensbæk (DK); RAHBEK, Uffe, 4623 Lille Skensved (DK)
(74) Representative: Haldor Topsøe A/S

(57) **Abstract**

An electrochemical cell comprising a reducing side (i.e. side of cell exposed to gases of lower oxygen potential than the opposing side) support structure containing Ni/NiO and stabilized zirconia, a reducing side electrode structure, an electrolyte structure, which consists of at least one layer and which is substantially gas-tight after heating, an oxidant side electrode (i.e. side of cell exposed to gases of higher oxygen potential than the reducing side) first material and an oxidant side electrode second material or group of materials having some degree of electronic conductivity is prepared by a process comprising (a) establishing several layers, either by tape casting together or by repeated tape casting procedures or by use of a slot die system, (b) laminating any components or subassemblies from a) to form the required unfired 4-layer structure, which includes a support, a reducing electrode structure, an electrolyte structure and a oxidant electrode first structure (originating from a standard tape casting), (c) sintering of the assembled four layers of the cell, (d) one or more infiltrations of the oxidant electrode first structure with a liquefied substance, i.e. salt solutions or molten salts, to obtain the oxidant electrode second material or group of materials, and (e) optionally a final heat treatment at a temperature above the operational temperature.

## Description

The present invention relates to the impregnation phase of the preparation of a novel electrochemical cell, more specifically a novel solid oxide fuel cell, which is suitable for low cost manufacture. This novel cell concept is an electrochemical cell with a substantially gas-tight electrolyte, where the electrolyte is designed for use between two gases, one of which is more reducing than the other (oxidant) gas.

This new cell concept constitutes a novel cell design consisting of an anode support, the anode, the electrolyte and the cathode. There is no barrier layer between the electrolyte and the cathode.

What is especially interesting in this novel cell design is the porous cathode backbone and the process for obtaining it.

A solid oxide fuel cell (SOFC) is a fuel cell using a solid oxide as electrolyte material having ionic conductivity. The fuel cell generally has an operating temperature as high as around 1000°C, although lately there has been developed cells having an operating temperature up to only 800°C. The SOFC consists of a fuel electrode, i.e. an anode, and an air electrode, i.e. a cathode, with an electrolytic material sandwiched in between the electrodes, thereby making up a single cell as a three-layer unit consisting of fuel electrode/electrolyte/air electrode.

Solid oxide fuel cells have gained widespread recognition as a viable high temperature fuel cell technology. Since it has no liquid electrolyte, any metal corrosion and electrolyte management problems, which are typically associated with the use of liquid electrolytes, are avoided. In solid oxide fuel cells the electrolyte is made primarily from solid ceramic materials, which are capable of surviving the high temperature environment typically encountered during operation of SOFCs. The operating temperature, which is well over 600°C, allows internal reforming, promotes rapid kinetics with the use of non-precious materials and produces high-quality by-product heat. However, the high working temperature of the SOFC imposes stringent requirements on its fabrication materials. Because of the high operating temperatures of conventional SOFCs (approximately 600 to 1000°C), the materials used to fabricate the respective cell components are limited by chemical stability in oxidizing and reducing environments, chemical stability of contacting materials, conductivity and thermo-mechanical compatibility.

The SOFC electrodes are typically prepared from a composite of an electronically conductive material and the electrolyte oxide. For example with electrolytes made from yttria-stabilised zirconia (YSZ), the conventional anode is a Ni-YSZ, ceramic-metallic (cermet) composite. In addition to maintaining porosity in the anode and providing a CTE (coefficient of thermal expansion) match with the electrolyte, the YSZ in the cermet extends the region into which ions can migrate, increasing the length of the three-phase boundary (TPB).

A material commonly used for SOFC cathodes is a composite of YSZ with Sr-doped LaMnO₃ (LSM). Just as with the Ni cermets, YSZ in the LSM-YSZ composite provides a pathway for ion migration in order to extend the TBP region within the cathode. Great care usually must be taken in the preparation of oxide composites, like that of LSM and YSZ, to avoid solid-state reactions that lead to insulating phases. In general the two oxide phases are prepared separately, physically mixed and then calcined.

Over the recent years a number of efforts have been made to improve the functioning of SOFC electrodes. For instance, published US patent application no. 2009/0218311 describes the preparation of a catalyst with a layered structure in the electrode/electrolyte interface of a fuel cell. A plastic or glass substrate is used together with an electrolyte (such as YSZ), a catalyst layer (such as Ni or Pd) and a porous layer. However, the catalyst keeps its layered structure during the process, and thus it is not distributed.

US 2010/0075194 discloses a high performance, low cost cathode with low polarization resistance, which binds well to an electrolyte. This publication deals with an ion-conductive layer (doped cerium oxide) followed by a mixed ion-conductive and electron-conductive layer. Again, the catalyst remains in the layered structure and therefore does not become distributed.

US 2009/0148742 concerns high performance multilayer electrodes and i.a. mentions insertion of a cerium oxide based ion-conductive and electron-conductive layer in the interface between anode and electrolyte to improve the electrochemical performance of SOFC anodes.

In US patent no. 6.420.064 it is described how a composite cathode containing mixed electron-conductive (Pd) and ion-conductive (YSZ) functional layers gets deposited on the electrolyte by e.g. screen printing. Then lanthanum cobaltite is printed over the functional layers, which are subsequently sintered *in situ* during operation of the SOFC.

US 2009/0011314 concerns an SOFC with reduced electrical resistance, which comprises an interfacial layer containing an ion-conductive material inserted between an electrode layer and an electrolyte layer. The ion-conductive material can i.a. be YSZ or GDC, preferably inserted by atomic layer deposition (ALD), and a catalytic metal, such as Pt, may be present.

US 2009/0061284 describes that i.a. niobium-doped strontium titanate can be used as SOFC anode and impregnated with Ni and doped cerium oxide. The interface of the electrode/electrolyte was not modified in this instance, but the same niobium-doped strontium titanate as in the present invention was present.

Finally, in WO 2013/060669 there is disclosed a modified anode/electrolyte structure in the form of an assembly comprising (a) an anode consisting of a backbone of electronically conductive perovskite oxides selected from the group consisting of niobium-doped strontium titanate, vanadium-doped strontium titanate, tantalum-doped strontium titanate and mixtures thereof, (b) a Scandia and yttria-stabilised zirconium oxide electrolyte and (c) a metallic and/or a ceramic electrocatalyst in the shape of interlayers incorporated in the interface between the anode and the electrolyte. This assembly is first subjected to sintering at a temperature of about 1200°C in air, and then the sintered assembly is heated to about 1000°C for up to 5 hrs in H₂/N₂ in a separate furnace, these heat treatments resulting in the metallic and/or ceramic interlayers being distributed in the electrolyte/anode backbone junction.

The overall purpose of the present invention is to provide an electrochemical cell comprising a reducing side (i.e. side of cell exposed to gases of lower oxygen potential than the opposing side) support structure containing Ni/NiO and stabilized zirconia, a reducing side electrode structure, an electrolyte structure, which consists of at least one layer and which is substantially gas-tight after heating, an oxidant side electrode (i.e. side of cell exposed to gases of higher oxygen potential than the reducing side) first material, and finally an oxidant side electrode second material or group of materials having some degree of electronic conductivity.

According to the invention, the half-cell of this novel electrochemical cell is prepared by steps including tape casting of the anode support, multilayer tape casting of anode and electrolyte, lamination and sintering.

More specifically the present invention concerns a process for preparing an electrochemical cell comprising a reducing side (i.e. side of cell exposed to gases of lower oxygen potential than the opposing side) support structure containing Ni/NiO and stabilized zirconia, said structure having a thickness after heating of at least 100 µm, preferably at least 200 µm, a reducing side electrode structure, said structure having a thickness after heating of at least 5 µm, preferably 5-30 µm, more preferably 10-20 µm, an electrolyte structure, which consists of at least one layer and which is substantially gas-tight after heating, an oxidant side electrode (i.e. side of cell exposed to gases of higher oxygen potential than the reducing side) first material having a thickness after heating of at least 10 µm, preferably 10-50 µm, more preferably 15-40 µm and most preferably 20-40 µm, and finally an oxidant side electrode second material or group of materials having some degree of electronic conductivity, said process comprising the following steps:
(a) establishing several layers, either by tape casting together or by repeated tape casting procedures or by use of a slot die system,
(b) laminating any components or subassemblies from a) to form the required unfired 4-layer structure, which includes a support, a reducing electrode structure, an electrolyte structure and a oxidant electrode first structure (originating from a standard tape casting),
(c) sintering of the assembled four layers of the cell,
(d) one or more infiltrations of the oxidant electrode first structure with a liquefied substance, i.e. salt solutions or molten salts, to obtain the oxidant electrode second material or group of materials, and
(e) optionally a final heat treatment at a temperature above the operational temperature.

The above electrochemical cell has a new cathode composition consisting of a porous, pre-sintered YSZ cathode backbone containing lanthanum-strontium-ferrite (LSF) obtained from La, Sr and Fe nitrates as active cathode material. A cathode backbone must be easy to infiltrate, and therefore it should have porosity above 50% with large connected pores, which would also secure a fast gas-phase transport. On the other hand, high performance would require smaller pores and a high pore surface area. It has turned out that a porous cathode backbone can be made by tape casting, whereby a reasonable pore structure and a uniform thickness is obtained.

One of the reasons for focusing on this new cathode material is that nitrates are cheaper than the commonly used perovskite materials. Further, no barrier layer is needed because of the low cathode sintering temperature. Another reason is that the thermal expansion coefficient (TEC) of the cathode equals that of the electrolyte, which will improve the durability. Furthermore, less cathode material will be needed to obtain the same performance.

This process has been created with a view to the following desirable process requirements: The process should be as economically advantageous as possible, involving as little handling as possible. Further, it should be possible to up-scale the processing as needed, and finally no extra high temperature sintering (at around 1250°C) should be necessary. This can be obtained by tape casting and co-sintering with the half cell.

To obtain the optimal porous cathode backbone, a number of potential pore-forming materials have been examined, including graphite flakes, fine graphite, synthetic graphite, carbon black polystyrene beads and polymethyl methacrylate (PMMA) beads. It has turned out that by using PMMA beads plus fine graphite, a thickness of around 40 µm and an open porosity around 45% can be obtained.

Obtaining the cathode material necessitates one or more infiltrations with a liquefied substance, i.e. salt solutions or molten salts, more specifically solutions or molten salts containing elements selected from e.g. La, Sr, Fe, Co, Mn and Ni. This procedure is described in more detail in the following:

The infiltration can be done by making cathode nanoparticles of e.g. La_{0.8}Sr_{0.2}FeO₃ and stabilizing these particles in solution. They are, however, difficult to infiltrate, because the porous cathode backbone acts as a filter.

Another possibility is to make a solution of e.g. lanthanum, strontium and iron nitrates in water. These starting materials are fairly cheap, and they lead to a reasonably stable solution. However, it is necessary to infiltrate a number of times to obtain the desired result.

Still another possibility is to make a hot melt of e.g. the lanthanum, strontium and iron nitrates instead of using them in an aqueous solution. The melt has to be very hot to dissolve Sr(NO₃)₂, and this hot melt is corrosive. Unlike the above approach with nitrates dissolved in water, the hot melt approach potentially only requires one infiltration.

The infiltration procedure can comprise the following: (1) apply solution on the substrate, (2) let stand for a period of time, then evacuate to around 0.2 bar, (3) wipe off excess solution, (4) heat up to 400°C for 30 minutes followed by rapid heating and cooling, (5) weigh and (6) repeat. It is noted that this is only one of several possible procedures.

Preferably the second material or group of materials remaining after heating primarily consists of a random mixture of oxides and mixed oxides with most or more than 50% or preferably more than 80% or most preferably more than 95% of the majority of metal ions belonging to the group of La, Sr, Co, Fe, and Mn. Specifically it is preferred that the second material or group of materials remaining after heating primarily consists of a mixture of oxides and mixed oxides resembling in average the composition of Sr-doped LaFeO₃ (LSF), La_{0.8}Sr_{0.2}FeO₃, Sr-doped LaMnO₃ (LSM), La_{0.75}Sr_{0.25}MnO₃, lanthanum strontium cobalt ferrite (LSCF), lanthanum strontium cobaltite (LSC), lanthanum nickel ferrite (LNF), LaFeO₃ or LaCoO₃. It is also preferred that the second material or group of materials remaining after heating primarily consists of a mixture of oxides and mixed oxides with a chemical composition corresponding to the formula

Ln_{1-x-y}M_{y}Fe_{1-z}T_{z}O_{3-δ}

wherein Ln is a lanthanide, M is Sr or Ca, T is Co or Cu, 0.02 ≤ x ≤ 0.05, 0.1 ≤ y ≤ 0.6, 0.1 ≤ z ≤ 0.3 and 0 ≤ δ ≤ 0.25, and wherein the material or group of materials has a medium grain size from 0.4 to 1.0 µm. Especially preferred embodiments thereof include those wherein 0.3 ≤ y ≤ 0.5 and preferably y = 0.4; 0.15 ≤ z ≤ 0.25 and preferably z = 0.2; Ln is lanthanum; M is strontium and T is cobalt. The second material or group of materials remaining after heating may also, in another preferred embodiment, comprise a compound selected from:
La_{0.58}Sr_{0.4}Fe_{0.8}Co_{0.2}O_{3-δ},
La_{0.55}Sr_{0.4}Fe_{0.8}Co_{0.2}O_{3-δ},
La_{0.78}Sr_{0.2}Fe_{0.8}Co_{0.2}O_{3-δ}
and La_{0.58}Sr_{0.4}Fe_{0.8}Cu_{0.2}O_{3-δ}.

Further it is preferred that the liquefied substance for the infiltration(s) primarily consists of either salts dissolved in water or molten salts. Moreover the liquefied substance is heated to a temperature above room temperature during the infiltration process.

The amount of material added can be defined by achieving an electronic conductivity in the structure (with the exception of any surface layers) of at least 1 S/cm, preferably more than 5 S/cm and most preferably more than 10 S/cm at room temperature following a short-term heating to 500°C.

It is further preferred that the second material or group of materials is heat-treated at a temperature between 500 and 900°C to arrive at its final structural composition before reduction of the reducing side electrode and support.

As an example, infiltration has been made with a solution consisting of (La_{0.6}Sr_{0.4})_{0.95}FeO₃ in water. The solution had a concentration of 1.25 M. Citric acid was used to make a chelate. The chelate/metal ratio was 1.25:1 and 1.05:1, respectively.

The cathode weight% vs. the number of infiltration cycles followed the same curve with and without vacuum used during infiltration.

## Claims

1. A process for preparing an electrochemical cell comprising a reducing side (i.e. side of cell exposed to gases of lower oxygen potential than the opposing side) support structure containing Ni/NiO and stabilized zirconia, said structure having a thickness after heating of at least 100 µm, preferably at least 200 µm, a reducing side electrode structure, said structure having a thickness after heating of at least 5 µm, preferably 5-30 µm, more preferably 10-20 µm, an electrolyte structure, which consists of at least one layer and which is substantially gas-tight after heating, an oxidant side electrode (i.e. side of cell exposed to gases of higher oxygen potential than the reducing side) first material having a thickness after heating of at least 10 µm, preferably 10-50 µm, more preferably 15-40 µm and most preferably 20-40 µm, and finally an oxidant side electrode second material or group of materials having some degree of electronic conductivity, said process comprising the following steps:
(a) establishing several layers, either by tape casting together or by repeated tape casting procedures or by use of a slot die system,
(b) laminating any components or subassemblies from a) to form the required unfired 4-layer structure, which includes a support, a reducing electrode structure, an electrolyte structure and a oxidant electrode first structure (originating from a standard tape casting),
(c) sintering of the assembled four layers of the cell,
(d) one or more infiltrations of the oxidant electrode first structure with a liquefied substance, i.e. salt solutions or molten salts, to obtain the oxidant electrode second material or group of materials, and
(e) optionally a final heat treatment at a temperature above the operational temperature.

2. A process according to claim 1, wherein the second material or group of materials remaining after heating primarily consists of a mixture of oxides and mixed oxides with most or more than 50% or preferably more than 80% or most preferably more than 95% of the majority of metal ions belonging to the group of La, Sr, Co, Fe, and Mn.

3. A process according to claim 2, wherein the second material or group of materials remaining after heating primarily consists of a mixture of oxides and mixed oxides resembling in average the composition of Sr-doped LaFeO₃ (LSF), La_{0.8}Sr_{0.2}FeO₃, Sr-doped LaMnO₃ (LSM), La_{0.75}Sr_{0.25}MnO₃, lanthanum strontium cobalt ferrite (LSCF), lanthanum strontium cobaltite (LSC), lanthanum nickel ferrite (LNF), La-FeO₃ or LaCoO₃.

4. A process according to claim 2, wherein the second material or group of materials remaining after heating primarily consists of a mixture of oxides and mixed oxides with a chemical composition corresponding to the formula
Ln_{1-x-y}m_{y}Fe_{1-z}T_{z}O_{3-δ}
wherein Ln is a lanthanide, M is Sr or Ca, T is Co or Cu, 0.02 ≤ x ≤ 0.05, 0.1 ≤ y ≤ 0.6, 0.1 ≤ z ≤ 0.3 and 0 ≤ δ ≤ 0.25, and wherein the material or group of materials has a medium grain size from 0.4 to 1.0 µm.

5. A process according to claim 4, wherein 0.3 ≤ y ≤ 0.5 and preferably y = 0.4.

6. A process according to claim 4, wherein 0.15 ≤ z ≤ 0.25 and preferably z = 0.2.

7. A process according to any of the claims 4-6, wherein Ln is lanthanum.

8. A process according to any of the claims 4-7, wherein M is strontium.

9. A process according to any of the claims 4-8, wherein T is cobalt.

10. A process according to any of the claims 4-9, wherein the second material or group of materials remaining after heating comprises a compound selected from:
La_{0.58}Sr_{0.4}Fe_{0.8}Co_{0.2}O_{3-δ},
La_{0.55}Sr_{0.4}Fe_{0.8}Co_{0.2}O_{3-δ},
La_{0.78}Sr_{0.2}Fe_{0.8}Co_{0.2}O_{3-δ}
and La_{0.58}Sr_{0.4}Fe_{0.8}Cu_{0.2}O_{3-δ}.

11. A process according to claim 2, wherein the second material or group of materials remaining after heating primarily consists of a mixture of oxides and mixed oxides resembling in average the composition of A-site deficient LSF, LSM, LSCF, LSC, LCM, LaFeO₃ or LaCoO₃.

12. A process according to claim 1, wherein the liquefied substance primarily consists of salts dissolved in water.

13. A process according to claim 1, wherein the liquefied substance primarily consists of molten salts.

14. A process according to claim 12 or 13, wherein the liquefied substance is heated to a temperature above room temperature during the infiltration process.

15. A process according to any of the preceding claims, wherein the amount of material added is defined by achieving an electronic conductivity of the second structure inside the oxidant electrode first structure (with the exception of any surface layers) of at least 1 S/cm, preferably more than 5 S/cm and most preferably more than 10 S/cm at room temperature following a short-term heating to 500°C.

16. A process according to any of the claims 1-14, wherein the second material or group of materials is heat-treated at a temperature between 500 and 900°C to arrive at its final structural composition before reduction of the reducing side electrode and support.

17. An electrochemical cell, in which the cathode backbone is prepared by a process according to any of the preceding claims.
